# EUROPÄISCHE PATENTANMELDUNG

(11) **EP 4 838 660 A1**
(43) Veröffentlichungstag der Anmeldung: **11.11.2026**
(21) Anmeldenummer: 26177062.2
(22) Anmeldetag: 07.05.2026
(51) Int. Cl.: H01M 50/251, B66F 3/06, B66F 3/08, B66F 3/22, B66F 7/06, B66F 13/00

(54) **UNTERFLURBATTERIESPEICHER**

(30) Priorität: 07.05.2025 DE 102025117466
(71) Anmelder: Koki Technik Transmission Systems GmbH, 09399 Niederwürschnitz (DE); Westsächsische Hochschule Zwickau, Körperschaft des öffentlichen Rechts, 08056 Zwickau (DE)
(72) Erfinder: Vieweg, Heiko, 09337 Hohenstein-Ernstthal (DE); Bodach, Mirko, 09337 Hohenstein-Ernstthal (DE); Jungandreas, Carsten, 09337 Callenberg (DE)
(74) Vertreter: Rumrich, Gabriele

(57) **Zusammenfassung**

Die Erfindung betrifft einen Unterflurbatteriespeicher, wobei der Unterflurbatteriespeicher eine im Erdreich (E) angeordnete Umhausung (2), Batteriespeichermodule (5) und Elektronikkomponenten (6) zur Steuerung der Batteriespeichermodule (5) aufweist und in eine bestehende Infrastruktur integrierbar ist, wobei die Batteriespeichermodule (5) und Elektronikkomponenten (6) in einer, in der Umhausung (2) eingelassenen Kabine (1) angeordnet sind, die mit den darin angeordneten Batteriespeichermodulen (5) und Elektronikkomponenten (6) einen Anschluss an das Stromnetz über eine Energieführungskette (12) aufweist, wobei die Kabine (1) in einer eingefahrenen Position des Unterflurbatteriespeichers vollständig versenkt und mit einer Abdeckung (7) eben an ein Bodenniveau des Erdreichs (E) angepasst ist und wobei die Kabine (1) mit den darin angeordneten Batteriespeichermodulen (5) und Elektronikkomponenten (6) vertikal mittels eines Hubsystems aus der, im Erdreich (E) angeordneten Umhausung (2) ausfahrbar ist um eine oberirdische Wartungsmöglichkeit zu realisieren, wobei die Kabine (1) eine, einen ein Zugang zur Wartung rund um die Kabine (1) ermöglichende, offene Bauweise aufweist, und in Ständerbauweise ausgebildet ist und in einem ausgefahrenen Zustand von innerhalb der Kabine (1) und von außerhalb der Kabine (1) für Reparaturen sowie Wartungsarbeiten zugänglich ist.

## Beschreibung

Die Erfindung betrifft einen Unterflurbatteriespeicher nach dem Oberbegriff des ersten Patentanspruchs und findet insbesondere als stationärer Energiespeicher für die Stromnetzversorgung Anwendung.

Energiespeicher in Form von Batteriespeichern in Containern sind schwer in bestehende Infrastruktur zu integrieren. Dem gegenüber haben Unterflurkonzepte wiederum einen großen Raumbedarf, um eine Begehbarkeit zu gewährleisten. Die Komponenten müssen vor Ort eingebaut und angeschlossen werden. Eine Vormontage einzelner Komponenten ist nur sehr bedingt möglich.

Aus der Druckschrift WO 2020/193378 A1 ist ein Batteriespeicher, insbesondere zur Pufferung eines elektrischen Versorgungsnetzes bekannt, wobei der Batteriespeicher ein Gehäuse in Form eines ISO-Containers mit, im Inneren auf einem Trägersystem angeordneten Batteriezellen-Modulen aufweist. Das Träger-System ist gegenüber dem Gehäuse elektrisch isoliert. Eine derartige Ausgestaltung in Form eines Containers ist jedoch schwer in bestehende Infrastruktur zu integrieren.

Aus der Druckschrift DE 10 2013 012 250 A1 ist ein Hochleistungs- oder Hochenergiespeicher mit Betriebsraum für elektrische Anlagen bekannt, bei dem der Betriebsraum mit den darin befindlichen Batterien zumindest teilweise unter der Geländelinie angeordnet ist. Die Energiespeicher können über eine Hebeeinrichtung separat entnommen und extern eingesetzt werden.

Die Druckschrift EP 3 288 141 A1 offenbart ein automatisiertes Batterie-Speichersystem zur Stabilisierung von Stromnetzen. Das Speichersystem ist in Form eines Containers ausgebildet und weist alle für den Betrieb benötigten Komponenten innerhalb des Containers auf. Nachteilig ist der erhöhte Raumbedarf beim Aufstellen der Container.

Weitere Lösungen sind aus den Druckschriften AT 217 664 B und EP 0 306 058 81 bekannt, welche Aufzugseinrichtungen für Fahrzeuge in einem Parkgebäude betreffen, die jedoch keine Unterflurspeicher zum Anschluss an eine Infrastruktur definieren.

Die Druckschrift EP 0 306 058 B1 bezieht sich auf eine Ladeinfrastruktur für elektrisch angetriebene Fahrzeuge mit einem Ladeverbund mit Ladesäulen, die miteinander gekoppelt sind, wobei der Ladeverbund mindestens einen Batteriespeicher als Pufferspeicher aufweist, wobei der Batteriespeicher unterirdisch angeordnet sein kann. Aufgabe dieser Lösung ist es, eine Ladeinfrastruktur zur Ladung mindestens eines elektrisch angetriebenen oder antreibbaren Kraftfahrzeugs anzugeben. Insbesondere soll eine kostengünstige Ladeinfrastruktur realisiert werden, welche einen Schnellladebetrieb auch von mehreren parallel angeschlossenen Kraftfahrzeugen ermöglicht. Dazu kann der Batteriespeicher unterirdisch versenkt, also in einer untergrundseitigen Aufnahme eingesetzt sein. Dadurch soll der vorhandene Bauraum für Gehsteige oder dergleichen nicht nachteilig eingeschränkt werden und der Batteriespeicher somit optisch unsichtbar angeordnet und vor äußeren Einflüssen wie beispielsweise Vandalismus geschützt sein Wie der Batteriespeicher konkret ausgestaltet und im Erdreich angeordnet ist und wie ggf. Reparatur- bzw. Wartungsarbeiten an diesem realisiert werden, wird nicht offenbart.

Aus den Druckschriften EP 2 463 162 A2 und DE 10 2009 035 253 A1 sind Batteriewechselstationen für Fahrzeugbatterien mit unterirdischen Lager- und Wechselcontainern bekannt, wobei komplette Container im Erdreich verbaut sind und die Batterien darin gelagert und über horizontale und vertikale Transportmittel in ein Fahrzeug gewechselt werden.

Aufgabe der Erfindung ist es, einen Unterflurbatteriespeicher zu entwickeln, welcher einen geringen Raumbedarf aufweist und in die bestehende Infrastruktur integrierbar ist und für Reparaturen sowie Wartungsarbeiten zugänglich ist.

Diese Aufgabe wird mit den Merkmalen des ersten Patentanspruchs gelöst.

Vorteilhafte Ausgestaltungen ergeben sich aus den Unteransprüchen.

Der Unterflurbatteriespeicher weist eine im Erdreich angeordnete Umhausung, Batteriespeichermodule und Elektronikkomponenten zur Steuerung der Batteriespeichermodule auf und ist in eine bestehende Infrastruktur integrierbar, wobei die Batteriespeichermodule und Elektronikkomponenten in einer, in der Umhausung eingelassenen Kabine angeordnet sind, die mit den darin angeordneten Batteriespeichermodulen und Elektronikkomponenten einen Anschluss an das Stromnetz über eine Energieführungskette aufweist, wobei die Kabine in einer eingefahrenen Position des Unterflurbatteriespeichers vollständig versenkt und mit einer Abdeckung eben an ein Bodenniveau des Erdreichs angepasst ist wobei die Kabine mit den darin angeordneten Batteriespeichermodulen und Elektronikkomponenten vertikal mittels eines Hubsystems aus der, im Erdreich angeordneten Umhausung ausfahrbar ist um eine oberirdische Wartungsmöglichkeit zu realisieren, wobei die Kabine eine, einen ein Zugang zur Wartung rund um die Kabine ermöglichende, offene Bauweise aufweist und in Ständerbauweise ausgebildet ist und in einem ausgefahrenen Zustand von innerhalb der Kabine und von außerhalb der Kabine für Reparaturen sowie Wartungsarbeiten zugänglich ist.

Mittels des Hubsystems ist es möglich, durch Ausfahren der Kabine aus dem Erdreich, eine oberirdische Wartungsmöglichkeit zu ermöglichen.

In einer vorteilhaften Ausgestaltung ist die Umhausung in Form einer Betonwanne mit einem Boden und umfangsseitigen Seitenwänden ausgebildet. Vorteilhafter Weise weist die Umhausung umfangsseitig eine Drainage zum Erdreich sowie eine Kiesschicht im Bodenbereich zum Schutz vor Niederschlag und Grundwasser auf.

Für eine stabile Konstruktion ist die Kabine mittels vertikaler Führungen in der Umhausung geführt. Dazu finden bevorzugt Führungen in Form von, an den Seitenwänden der Umhausung anliegenden, Rollen Anwendung. Bei einer vertikalen Bewegung der Kabine rollt sich die Kabine mittels der Rollen an den Seitenwänden ab, wobei bei maximalem Aushub die Rollen weiterhin in Kontakt zu den Seitenwänden der Umhausung bleiben.

Bevorzugt ist das Hubsystem als vertikale elektromotorisch angetriebene Gewindespindel ausgebildet. Die Kabine weist in dieser Ausgestaltung einen Motor auf, mittels dessen sie entlang der Gewindespindel verfahrbar ist. In einer abgesenkten Position der Gewindespindel reicht die Gewindespindel in die Kabine hinein.

Die Gewindespindel kann vorzugsweise ein Trapezgewinde aufweisen.

In einer alternativen Ausgestaltung ist das Hubsystem ein elektromotorisch oder hydraulisch angetriebenes Scherenhubsystem. In einer derartigen Ausgestaltung kann der Motor zum Antrieb der Kabine an der Kabine oder im Bodenbereich der Umhausung angeordnet sein.

Die Kabine ist bevorzugt derart gestaltet, dass sie in einer eingefahrenen Position des Energiespeichers vollständig versenkt und mit einer Abdeckung eben an das Bodenniveau des Erdreichs angepasst ist.

Zur Gewährleistung der Betriebssicherheit ist bevorzugt an der Oberseite der Abdeckung ein Löschwasseranschluss vorgesehen.

Des Weiteren können nach oben weisende Anschlagösen an der Abdeckung montiert sein.

Besonders bevorzugt ist die Kabine austauschbar in der Umhausung angeordnet, wobei eine neue Kabine einbaufertig vorkonfektioniert und ist mittels eines Kranes in die vorbereitete Umhausung einsetzbar ist

Zum Anschluss der Kabine mit den darin angeordneten Batteriespeichermodulen und Elektronikkomponenten an das Stromnetz weist die Kabine eine Energieführungskette auf.

Für die einfache Wartung der Kabine ist diese in Ständerbauweise ausgebildet und kann so in einem ausgefahrenen Zustand von innerhalb der Kabine und von außerhalb der Kabine für Reparaturen sowie Wartungsarbeiten erreicht werden. Je nach Ausgestaltung der Kabine und der darin montierten Batteriespeichermodule und Elektronikkomponenten kann auch eine Wartung nur von außen erfolgen.

Mit der vorliegenden Erfindung wird ein stationärer Energiespeicher bereitgestellt, der insbesondere für die Netzversorgung und als Energiespeicher für Wohnsiedlungen und für Häuser allgemein geeignet ist.

Die Erfindung wird nachfolgend an einem Ausführungsbeispiel und zugehörigen Zeichnungen näher erläutert.

Es zeigen:
- Figur 1: einen in den Boden eingelassenen Energiespeicher,
- Figur 2: einen Energiespeicher gemäß Figur 1 in einer Seitenansicht,
- Figur 3: eine ausgefahrene Position der Kabine für Wartungszwecke von außen,
- Figur 4: eine alternative Ausgestaltung des Hubsystems der Kabine,
- Figur 5: eine ausgefahrene Position der Kabine gemäß Figur 4,
- Figur 6: eine Kabine zum Einbau in eine unterirdische Umhausung.

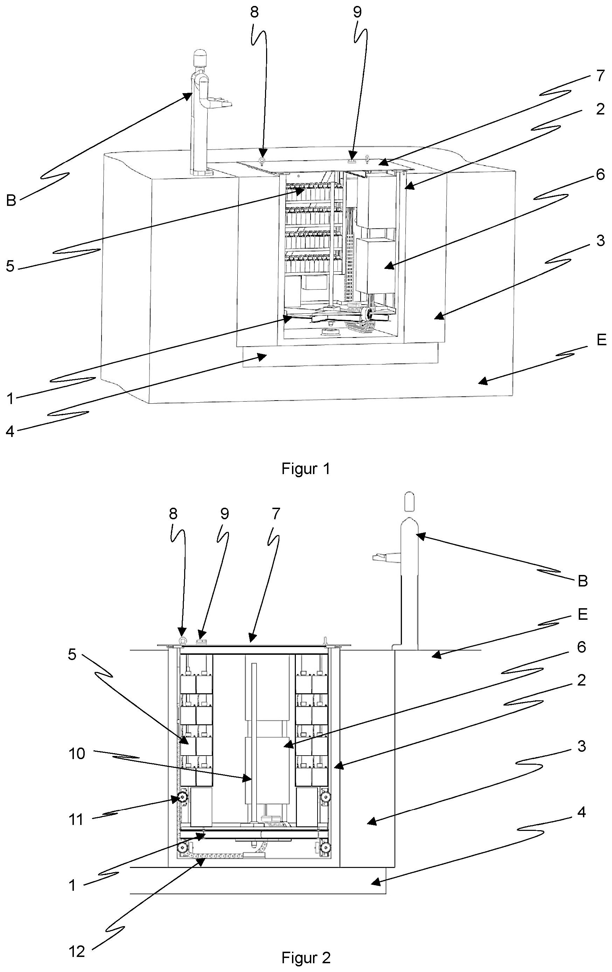

In der Figur 1 ist ein unterirdischer, im Erdreich E verbauter Unterflurbatteriespeicher in Form eines Pufferspeichers in einer Schnittansicht dargestellt. Figur 2 zeigt eine zugehörige seitliche Schnittdarstellung des Energiespeichers. Der Energiespeicher weist eine Kabine 1 auf, die innerhalb einer Umhausung 2 angeordnet ist. Die Umhausung 2 ist bevorzugt in Form einer Betonwanne ausgebildet und weist umfangsseitig eine Drainage 3 und am Boden eine Kiesschicht 4 als Abgrenzung und zum Schutz zum Erdreich E auf.

Des Weiteren sind die Innenabmessungen auf die Außenabmessungen der Kabine abgestimmt.

Die Kabine 1 weist Batteriespeichermodule 5 und Elektronikkomponenten 6 zur Steuerung der Batteriespeichermodule 5 auf. Die Kabine 1 wird einbaufertig vorkonfektioniert und ist mittels eines Kranes in die vorbereitete Umhausung 2 einsetzbar.

Die Kabine 1 ist in Figur 1 und 2 in einer Arbeitsposition dargestellt, das heißt die Kabine 1 ist im Erdreich E versenkt. An der Oberseite der Kabine 1 ist eine Abdeckung 7 angeordnet, die in der Arbeitsposition ebenerdig mit der Umgebung abschließt. Des Weiteren sind Anschlagösen 8 und ein Löschwasseranschluss 9 in der Abdeckung 7 vorgesehen. In der Arbeitsposition ist die Kabine 1 für einen Bediener B zur Wartung nicht zugänglich.

Die Kabine 1 weist ein vertikales Hubsystem in Form einer elektromotorisch angetriebenen Gewindespindel 10 mit einem Trapezgewinde auf, mittels der die Kabine 1 vertikal aus dem Erdreich E ausfahrbar ist. Die Gewindespindel ist zentral in der Mitte der Kabine angeordnet und weist in der Arbeitsposition durch die Kabine 1 in Richtung der Abdeckung 7. Zur Stabilisierung der Kabine 1 sind umfangsseitig an den Seitenprofilen der Kabine 1 in Richtung der Seitenwände der Umhausung 2 weisend Rollen 11 vorgesehen, die entlang der Seitenwände der Umhausung 2 abrollen, wodurch die Kabine 2 innerhalb der Umhausung 2 geführt wird. Der Anschluss der Batteriespeichermodule und Elektronikkomponenten an das Stromnetz erfolgt über eine Energieführungskette 12, die eine vertikale Bewegung der Kabine ausgleichen kann.

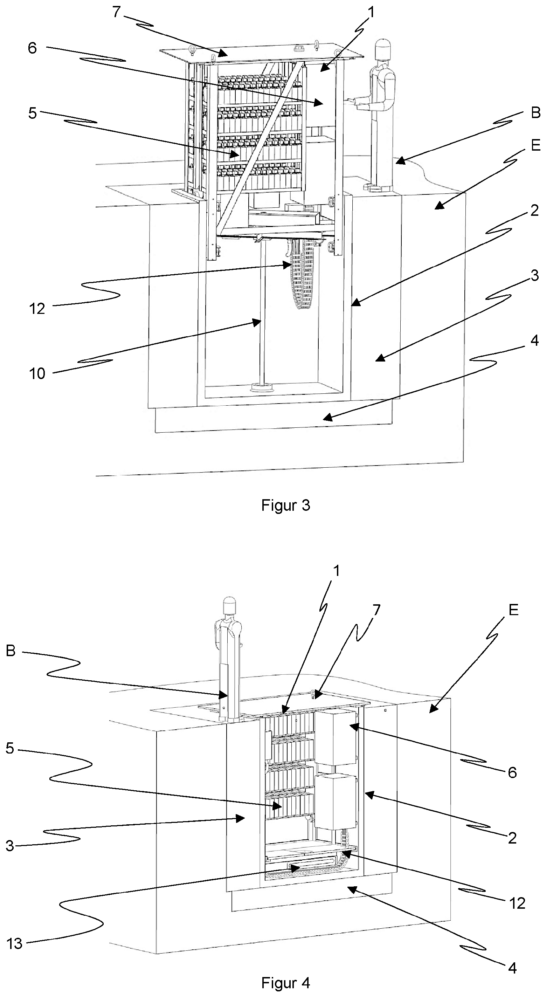

Durch die Gewindespindel 10 kann die Kabine in eine Wartungsposition angehoben werden. Die angehobene Wartungsposition ist in der Figur 3 dargestellt. Die Kabine 1 wird mittels der Gewindespindel 10 aus dem Erdreich E vertikal angehoben, wobei die Rollen 11 in der Wartungsposition weiterhin in Kontakt mit der Umhausung 2 bleiben. Die Kabine 1 und die darin angeordneten Batteriespeichermodule 5 und Elektronikkomponenten 6 sind in dieser Position von allen Seiten von außen zugänglich. Die Energieführungskette 12 weist eine Länge auf, die die Hubbewegung der Kabine 1 mitgeht.

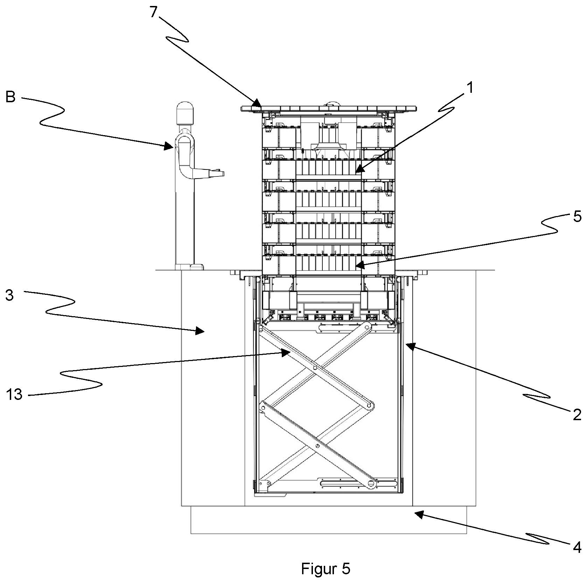

Ein alternatives Hubsystem ist in den Figuren 4 und 5 dargestellt. Gegenüber den Figuren 1 bis 4 findet in dem Energiespeicher gemäß Figur 4 und 5 ein Hubsystem in Form eines Scherenhubsystems 13 Anwendung. Das Scherenhubsystem 13 ist unter der Kabine 1 oberhalb des Bodens der Umhausung 2 angeordnet und hebt die Kabine 1 vertikal aus dem Boden. Auch in dieser Ausgestaltung kann die Kabine 1 vorkonfektioniert angeliefert und in der Umhausung 2 mittels eines Krans verbaut werden. Der Aufbau der Kabine 1 entspricht dabei dem Aufbau der Kabine 1 gemäß den Figuren 1 bis 3.

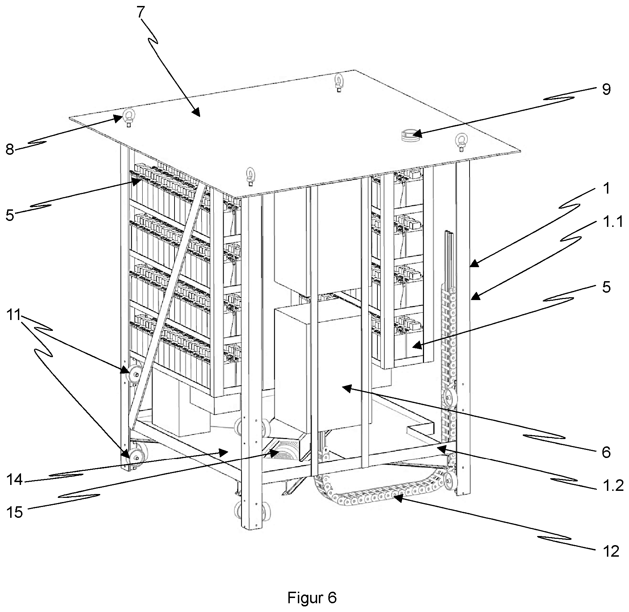

Die Figur 6 zeigt eine Darstellung der Kabine 1, die in die, im Erdreich angeordnete Umhausung vorzugsweise mittels eines Krans einsetzbar ist. Die Kabine 1 ist in Form eines Gestells mit Längsträgern 1.1 und Querträgern 1.2 ausgebildet. Des Weiteren weist die Kabine 1 eine Grundplatte 14 und einen, im Bereich der Grundplatte 14 montierten, Motor mit Spindelhubgetriebe 15 auf. Die Kabine 1 ist mittels eines Hubsystems in Form eines Spindelhubsystems 10 oder Scherenhubsystems 13 vertikal aus dem Erdreich E verfahrbar. Die Umhausung dient dabei als Vertikalführung für die umfangsseitig angeordneten Rollen 11 an den Längsträgern 1.1, die an den Seitenwänden entlang rollen.

Im Inneren der Kabine 1 sind die Batteriespeichermodule 5 und Elektronikkomponenten 6 angeordnet, die mittels der Energieführungskette 12 mit dem Stromnetz verbunden sind. An der Oberseite der Kabine 1 ist eine Abdeckung 7 vorhanden, die einen Löschwasseranschluss 9 für Notfälle sowie Anschlagösen 8 für die Montage der Kabine 1 aufweisen. Durch die offene Bauweise der Kabine 1 ist ein Zugang zur Wartung rund um die Kabine 1 möglich.

In einer alternativen Ausgestaltung kann die Kabine 1 eine eigene Umhausung mit einem Zugang in Form einer Öffnung oder Tür für einen Bediener aufweisen, wobei dadurch ein zusätzlicher Schutz erreicht werden kann.

Die Kabine 1 gemäß Figur 6 kann vorkonfektioniert an den Ort der Montage geliefert und mittels eines Krans mit dem Hubsystem vertikal im Erdreich eingelassen werden.

Da die Kabine 1 selbst keine Umhausung aufweist, denn diese ist in einer offenen Bauweise ausgeführt, kann die nach deren Ausfahren mögliche oberirdische Wartung rund um die Kabine 1 erfolgen. Dabei ist vorteilhaft, dass die Kabine in Ständerbauweise ausgebildet ist. Durch die offene Bauweise und die Ausführung in Ständerbauweise ist die Kabine 1 in einem ausgefahrenen Zustand von innerhalb der Kabine 1 und von außerhalb der Kabine 1 für Reparaturen sowie Wartungsarbeiten zugänglich.

Bei einem herkömmlichen Batteriespeicher-Container können lediglich nach dem Öffnen einer Tür innerhalb des Containers Wartungsarbeiten realisiert werden.

Dadurch, dass auch die im Randbereich der Kabine angeordneten Komponenten von außerhalb der Kabine gewartet werden können, ergeben sich neue Möglichkeiten der Anordnung dieser Komponenten.

Die Ständerbauweise beschreibt dabei im Maschinenbau eine Konstruktionsart, bei der eine Kabine (oder generell ein Gehäuse) aus einem tragenden Rahmen ("Ständer") aufgebaut wird - statt aus massiven, selbsttragenden Wänden.

Bei dieser Bauweise besteht die Kabine nur aus der Tragstruktur (Ständer / Rahmen) wie aus den Figuren 1 bis 6 ersichtlich ist, und weist außer Grundplatte 14 und der Abdeckung 7 keine umfangsseitige Verkleidung/Umhausung auf und ist in Form eines Gestells mit Längsträgern 1.1 und Querträgern 1.2 ausgebildet.

Mit dem erfindungsgemäßen Unterflurbatteriespeicher kann der Platzbedarf eines solchen Speichers auf die erforderlichen Komponenten begrenzt werden. Die Wartung kann erfindungsgemäß oberirdisch erfolgen, wodurch eine allseitige Begehbarkeit gewährleistet wird.

Des Weiteren ist es durch das Einlassen des Unterflurbatteriespeichers in den Boden möglich, ein Klimamanagement gegebenenfalls ohne Klimageräte zu erreichen, wobei der Boden, in dem der Unterflurbatteriespeicher eingelassen ist, den Unterflurbatteriespeicher mittels Wärmedämmung als Verschattung im Sommer kühlt und im Winter mittels Erdwärme eine zu starke Auskühlung verhindert, wodurch der Batteriespeicher in einem optimalen Temperaturfenster gehalten werden kann.

Die Kabine kann vorgefertigt werden, wodurch eine schnelle Installation am Einbauort erfolgen kann. Die Umhausung wird bevorzugt aus Beton-Fertigelementen hergestellt. Durch den modularen Aufbau des Energiespeichers ist ein kompletter Austausch der Kabine schnell möglich.

### Bezugszeichenliste

- 1: Kabine
- 1.1: Längsträger
- 1.2: Querträger
- 2: Umhausung
- 3: Drainage
- 4: Kiesschicht
- 5: Batteriespeichermodul
- 6: Elektronikkomponenten
- 7: Abdeckung
- 8: Anschlagöse
- 9: Löschwasseranschluss
- 10: Gewindespindel
- 11: Rollen
- 12: Energieführungskette
- 13: Scherenhubsystem
- 14: Grundplatte
- 15: Motor mit Spindelhubgetriebe

- E: Erdreich
- B: Bediener

## Patentansprüche

1. Unterflurbatteriespeicher, wobei der Unterflurbatteriespeicher eine im Erdreich (E) angeordnete Umhausung (2), Batteriespeichermodule (5) und Elektronikkomponenten (6) zur Steuerung der Batteriespeichermodule (5) aufweist und in eine bestehende Infrastruktur integrierbar ist, **dadurch gekennzeichnet, dass** die Batteriespeichermodule (5) und Elektronikkomponenten (6) in einer, in der Umhausung (2) eingelassenen Kabine (1) angeordnet sind, die mit den darin angeordneten Batteriespeichermodulen (5) und Elektronikkomponenten (6) einen Anschluss an das Stromnetz über eine Energieführungskette (12) aufweist, wobei die Kabine (1) in einer eingefahrenen Position des Unterflurbatteriespeichers vollständig versenkt und mit einer Abdeckung (7) eben an ein Bodenniveau des Erdreichs (E) angepasst ist und wobei die Kabine (1) mit den darin angeordneten Batteriespeichermodulen (5) und Elektronikkomponenten (6) vertikal mittels eines Hubsystems aus der, im Erdreich (E) angeordneten Umhausung (2) ausfahrbar ist um eine oberirdische Wartungsmöglichkeit zu realisieren, wobei die Kabine (1) eine, einen ein Zugang zur Wartung rund um die Kabine (1) ermöglichende, offene Bauweise aufweist, und in Ständerbauweise ausgebildet ist und in einem ausgefahrenen Zustand von innerhalb der Kabine (1) und von außerhalb der Kabine (1) für Reparaturen sowie Wartungsarbeiten zugänglich ist.

2. Unterflurbatteriespeicher nach Anspruch 1, **dadurch gekennzeichnet, dass** die Umhausung (2) in Form einer Betonwanne mit einem Boden und umfangsseitigen Seitenwänden ausgebildet ist.

3. Unterflurbatteriespeicher nach Anspruch 1 oder 2, **dadurch gekennzeichnet, dass** die Kabine (1) mittels vertikaler Führungen in der Umhausung (2) geführt ist.

4. Unterflurbatteriespeicher nach Anspruch 3, **dadurch gekennzeichnet, dass** die Führungen in Form von, an den Seitenwänden der Umhausung (2) anliegenden, Rollen (11) ausgebildet sind.

5. Unterflurbatteriespeicher nach einem der Ansprüche 1 bis 4, **dadurch gekennzeichnet, dass** das Hubsystem als vertikale elektromotorisch angetriebene Gewindespindel (10) ausgebildet ist und dass die Kabine (1) einen Motor (15) aufweist, mittels dessen sie entlang der Gewindespindel (10) verfahrbar ist.

6. Unterflurbatteriespeicher nach einem der Ansprüche 1 bis 4, **dadurch gekennzeichnet, dass** das Hubsystem ein elektromotorisch oder hydraulisch angetriebenes Scherenhubsystem (13) ist.

7. Unterflurbatteriespeicher nach Anspruch 1, **dadurch gekennzeichnet, dass** ein Löschwasseranschluss (9) in der Abdeckung (7) vorgesehen ist.

8. Unterflurbatteriespeicher nach Anspruch 1 oder 7, **dadurch gekennzeichnet, dass** nach oben weisende Anschlagösen (8) an der Abdeckung (7) montiert sind.

9. Unterflurbatteriespeicher nach einem der vorangegangenen Ansprüche, **dadurch gekennzeichnet, dass** die Kabine (1) austauschbar ist.

10. Unterflurbatteriespeicher nach einem der vorangegangenen Ansprüche, **dadurch gekennzeichnet, dass** die Kabine (1) in Ständerbauweise ausgebildet ist und in einem ausgefahrenen Zustand von innerhalb der Kabine (1) und von außerhalb der Kabine (1) für Reparaturen sowie Wartungsarbeiten gewartet werden kann.
